# EUROPÄISCHE PATENTSCHRIFT

(11) **EP 3 679 171 B1**
(45) Veröffentlichungstag und Bekanntmachung des Hinweises auf die Patenterteilung: **02.02.2022**
(21) Anmeldenummer: 18793565.5
(22) Anmeldetag: 09.10.2018
(51) Int. Cl.: C23C 28/00, C23C 14/08, C23C 14/14, C23C 14/16, F01D 5/28, F01D 5/14, F15D 1/00

(54) **SCHICHTSYSTEM UND SCHAUFEL**
LAYER SYSTEM AND BLADE
SYSTÈME DE COUCHES ET AUBE

(30) Priorität: 06.11.2017 DE 102017219642
(43) Veröffentlichungstag der Anmeldung: 15.07.2020
(73) Patentinhaber: Siemens Energy Global GmbH & Co. KG, 81739 München (DE)
(72) Erfinder: FLORES RENTERIA, Arturo, 12161 Berlin (DE); GHICOV, Andrei, 91058 Erlangen (DE); NEDDEMEYER, Torsten, 14612 Falkensee (DE)
(86) Internationale Anmeldenummer: PCT/EP2018/077458
(87) Internationale Veröffentlichungsnummer: WO 2019/086213

(56) Entgegenhaltungen:
- EP-A2- 2 862 958
- WO-A1-2006/084404
- WO-A1-2006/099754
- DE-A1- 2 421 590
- DE-A1-102011 077 620
- DE-A1-102015 222 812
- US-B2- 8 858 666

## Beschreibung

Die Erfindung betrifft ein Schichtsystem und eine Schaufel.

Beschichtungen für Kompressorschaufeln müssen Schutz vor Oxidation und Erosion bieten.

Oft wird nur eine Beschichtung zur Verbesserung der Oberflächeneigenschaften in Betracht gezogen.

Dokumente EP 2862958, WO 2006/084404, WO 2006/099754 und US 8,858,666 offenbaren Schichtsysteme zur Verbesserung der Oberflächeneigenschaften.

Es ist daher Aufgabe der Erfindung dieses Problem zu lösen.

Die Aufgabe wird gelöst durch ein Schichtsystem gemäß Anspruch 1 und einer Schaufel gemäß Anspruch 9.

In den Unteransprüchen sind weitere vorteilhafte Maßnahmen aufgelistet, die beliebig miteinander kombiniert werden können, um weitere Vorteile zu erzielen.

Es zeigen:
- Figur 1: schematisch die Struktur der Haifischhaut,
- Figur 2: eine Lotusblütenoberfläche,
- Figur 3: ein Schichtsystem und
- Figur 4: eine beispielhafte Turbinenschaufel mit Anwendungsfällen.

Eine Oberflächenstrukturierung wird derzeit nicht eingebracht, da diese in den bisherigen Beschichtungen aufwändig eingebracht werden konnte.

Vorzugsweise erzeugt die Struktur einer äußeren Schicht einen Haifischhauteffekt. Sie weist vorzugsweise eine PVD-Schicht und/oder entsprechend eine harte Beschichtung auf.

Bekannte Beschichtungen für Kompressorschaufeln wie lackartige Schichten, aufgebracht durch Schlicker, können diesen Effekt in der Regel nicht leisten.

Eine typische vorteilhafte PVD-Beschichtung basiert auf Aluminiumchrom und/oder Aluminiumchromoxid. Weitere Unterschichten zur Anpassung von Wärmeausdehnungskoeffizienten oder Schutzfunktionen sind möglich.

Eine Ausgestaltung beinhaltet, dass eine Chromzwischenschicht, insbesondere aus Chrom-Chromnitrid, auf einem Substrat aufgetragen wird, umgeben von einer aluminiumchrombasierten Basisschicht und einer äußeren Aluminiumchromoxidbeschichtung.

Die Figuren und die Beschreibung stellen nur Ausführungsbeispiele der Erfindung dar.

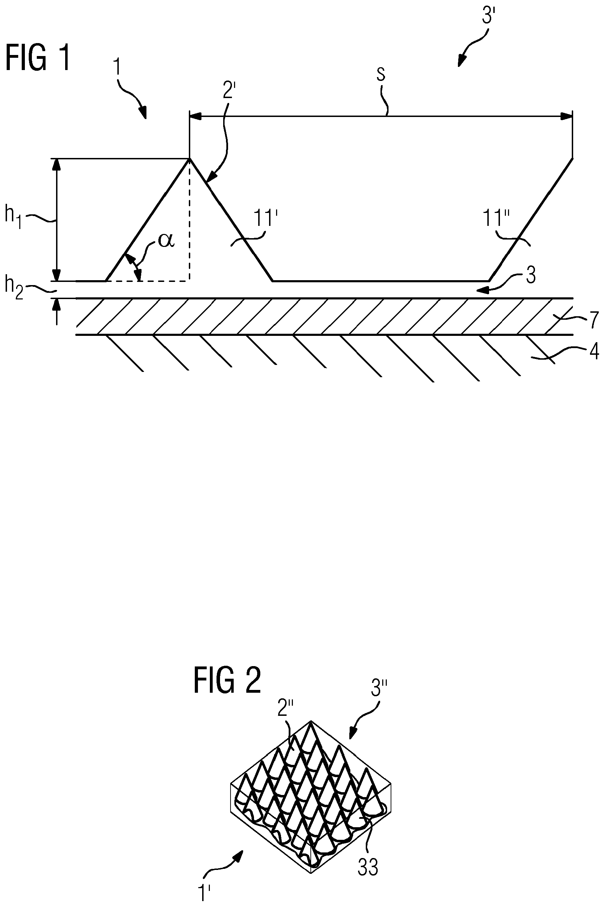

Die Figur 1 zeigt einen Querschnitt durch eine dreieckförmige Bahn 11 einer Schicht 1 als ein vorteilhaftes Beispiel einer im Querschnitt dreieckförmige Erhebung.

Die Schicht 3 hat eine Mindestdicke h2, von der sich ausgehend eine im Querschnitt dreieckförmige Bahn 11 mit der Höhe h1 erstreckt. Diese dreieckförmigen Bahnen 11 sind mehrfach vorhanden und die Spitzen der dreieckförmigen Bahnen 11 weisen einen Abstand s auf.

Die zugrundeliegende Schicht, in der die Bahn 11 vorhanden ist, weist eine Mindestdicke oder Restdicke von h2 auf.

Vorzugsweise stellen die dreieckförmigen Bahnen 11 ein gleichwinkliges Dreieck mit einem Winkel α dar.

Der Abstand s beträgt vorzugsweise mindestens 2* Maximum von h1, h2 und ein vorteilhafter Winkel α liegt zwischen 30° und 60°.

Diese Struktur ist vorzugsweise nur in der Schicht 3' vorhanden und insbesondere vollständig in dieser, d.h. berührt bzw. legt ein Substrat 4 nicht offen.

Im Falle einer mehrlagigen oder zweilagigen Schicht ist die Struktur vorzugsweise nur in der äußersten Beschichtung 3' vorhanden und legt die darunter liegende Schicht nicht offen.

Vorzugsweise beträgt die Höhe h1 ≥ 4µm und die Höhe h2 ≥ 2µm, wobei gelten soll h2 ≥ 2*h1.

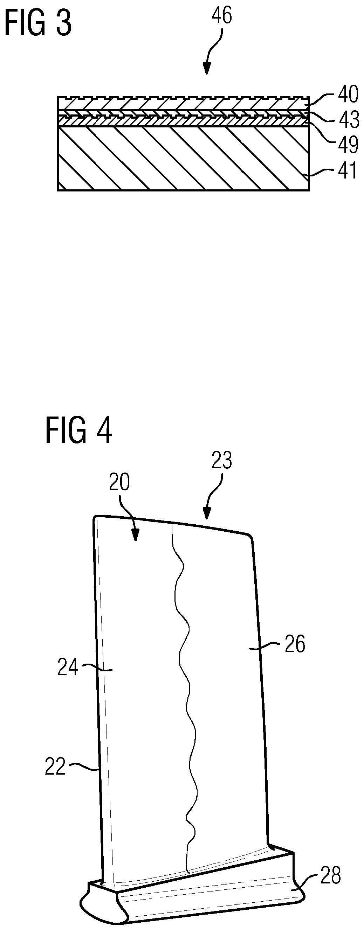

Eine solche Struktur kann auf eine Verdichterschaufel 20 (Fig. 4) aufgebracht werden, wobei der Schwerpunkt vorzugsweise im vorderen Bereich um die Anströmkante 22 vorhanden ist, mit dem Ziel, Verwirbelungen zu reduzieren und den Wirkungsgrad des Verdichters zu steigern.

Vorgeschlagen wird auch eine graduierte Strukturierung einer PVD-Schicht an Verdichterschaufeloberflächen gemäß Figur 4. Die Oberflächenstrukturierung erfolgt dabei vorzugsweise in einem Bearbeitungsschritt mittels Laser Beam Interference Processing (LBIP). Bei der LBIP Technologie wird ein Laserstrahl in zwei oder mehrere Laserstrahlen aufgeteilt und anschließend auf der Werkstückoberfläche wieder überlagert. Dadurch kommt es zu einer periodischen Modulation der Laserintensität, welche die Strukturierung der Bauteiloberflächen ermöglicht. Im vorderen Bereich der Verdichterschaufel (Eintrittskante) wird durch Überlagerung zweier interferierender Laserstrahlen eine Mikrostruktur zur Reduzierung des Strömungswiderstandes (ähnlich einer Haifischhaut) generiert.

Im hinteren Bereich der Verdichterschaufel 20 wird mit der LBIP Technologie eine Oberflächenstruktur geschaffen, durch die ein sogenanntes "dewetting" (Entnetzung) bewirkt wird. Dadurch wird eine Tropfenbildung von Wasser an Oberflächen stark eingeschränkt. Durch die Strukturierung der Oberfläche wird die Gefahr der Tropfenbildung und Tropfenablösung verkleinert, so dass mit weniger Erosion aufgrund von Tropfenschlag zu rechnen ist.

Der Übergang der Oberflächenstrukturierung von "Haifischhaut" zu "Dewetting-Effect" erfolgt dabei graduiert über die Oberfläche der Verdichterschaufel, wobei sich der Übergangsbereich von der ersten auf die letzte Stufe des Verdichters in Richtung der Anströmkante verschiebt.

Eine solche Beschichtung kann vorzugsweise über das gesamte Schaufelblatt 23 aufgebracht oder erzeugt werden.

Figur 2 zeigt eine Schicht 3" mit einer Oberfläche 2' mit Lotusblüteneffekt.

Viele Kegel 33, insbesondere Stumpfkegel sind vorzugsweise rasterförmig angeordnet. Ein Kegel 33 ist im Querschnitt dreieckförmig.

Für die Kegel 33 gilt vergleichbares wie die Bahnen 11', 11" bzw. der Höhe h1, der Höhe h2 und der Anordnung in der Schicht 3".

Die Kegel 33 sind vollständig in der Schicht 3" ausgebildet.

Figur 3 zeigt ein Schichtsystem 46 aus harter 40 und weicher Schicht 43.

Die dreieckförmigen Erhebungen 11', 11", ...; 33, ... sind nur in der harten Schicht 40, in keramischen Schichten, wie AlCrO ausgebildet, die auch die äußerste Schicht darstellt.

Die Schicht 40 ist mindestens 10% härter ausgebildet als die weiche Schicht 43.

Die zweite Schicht 43 ist metallisch, aus AlCr.

Direkt auf dem Substrat 41 ist eine Chromzwischeschicht 49 vorhanden.

Das Substrat 4, 41 ist vorzugsweise metallisch, insbesondere aus einem >=9 Gew.-% Chromstahl und weist insbesondere eine Rauigkeit von <=2µm auf.

Figur 4 zeigt beispielhaft eine Kompressorschaufel 20 mit einem Schaufelfuß 28, einem Schaufelblatt 23 mit einer Anströmkante 22 und zwei verschiedenen Oberflächenstrukturen 24, 26.

Im Anströmbereich um die Anströmkante 22 ist die bereits beschriebene Haifischhaut gemäß Figur 1 auf Saug- und Druckseite vorhanden.

In Strömungsrichtung gesehen, etwa auf der Hälfte der Schaufelblattlänge in Umströmungsrichtung gesehen, verändert sich die Struktur auf Saug- und Druckseite, bei der eine Lotusblüteneffektbeschichtung erzeugt wird, die wie in Figur 2 beispielhaft dargestellt ist, kegelförmig hervorstehende Strukturen aufweist.

Solche Strukturen können nachträglich mittels Bearbeitung mittels Laserstrahlinterferenz eingebracht werden.

Die Basis für die Schicht 7; 3', 3" stellt vorzugsweise eine PVD-Schicht dar. Die weist primär eine AlCr aufweisende unterliegende Schicht und eine außen- und überliegende Schicht auf, aufweisend AlCrO.

Das Substrat 4 ist vorzugsweise Chromstahl mit mindestens 9% Chrom (Cr), insbesondere mit einer Rauigkeit <=2µm.

Die PVD-Beschichtung hat folgende Schichtstruktur:
- Cr-Interlayer (insbesondere aus Cr/CrN)
- AlCr-Schicht
- AlCrO-Schicht als äußere Schicht, die dann die Bahnen 11', 11" oder Kegel 33 aufweist.

## Patentansprüche

1. Schichtsystem, zumindest aufweisend:
ein metallisches Substrat (4, 41)
- eine Chromzwischenschicht (49) direkt auf dem Substrat (4),
insbesondere aus Cr/CrN,
- eine untere oder mittlere Schicht (7, 43) aufweisend AlCr,
- eine äußere Schicht (3', 3", 40),
aufweisend AlCrO,
insbesondere bestehend aus AlCrO.

2. Schichtsystem nach Anspruch 1,
bei dem das metallische Substrat (4, 41),
ein >=9 Gew.-% Chromstahl aufweist.

3. Schichtsystem nach Anspruch 1 oder 2,
mit einer Rauigkeit des Substrates (4) <=2µm.

4. Schichtsystem nach einem oder mehreren der Ansprüche 1, 2 oder 3, bei der die untere oder mittlere Schicht (7, 43) aus AlCr besteht.

5. Schichtsystem nach einem oder mehreren der Ansprüche 1, 2, 3 oder 4,
bei dem eine äußere Schicht (3', 3", 40),
die äußerste Schicht (3', 3", 40) darstellt.

6. Schichtsystem nach einem oder mehreren der Ansprüche 1 bis 5,
wobei die AlCr und AlCrO Schichten PVD-Beschichtungen darstellen.

7. Schichtsystem nach Anspruch 1,
das zweilagig oder dreilagig ausgebildet ist,
bei der die Schicht (3', 3", 40) nach einem oder mehreren der Ansprüche 2, 3, 4, 5 oder 6 die äußerste Schicht bildet.

8. Schichtsystem nach einem oder mehreren der vorherigen Ansprüche 1 bis 7,
bei dem die Chromzwischenschicht (49) 0,2 µm dick ist.

9. Schaufel,
die zumindest teilweise ein Schichtsystem nach einem oder mehreren der Ansprüche 1 bis 8 aufweist.

## Claims

1. Layer system,
at least comprising:
a metallic substrate (4, 41)
- a chromium intermediate layer (49) directly on the substrate (4),
in particular composed of Cr/CrN,
- a lower or middle layer (7, 43) comprising AlCr,
- an outer layer (3', 3", 40)
comprising AlCrO,
in particular consisting of AlCrO.

2. Layer system according to Claim 1,
wherein the metallic substrate (4, 41)
comprises a >=9% by weight chromium steel.

3. Layer system according to Claim 1 or 2
having a roughness of the substrate (4) of <=2 µm.

4. Layer system according to one or more of Claims 1, 2 or 3,
wherein the lower or middle layer (7, 43) consists of AlCr.

5. Layer system according to one or more of Claims 1, 2, 3 or 4,
wherein an outer layer (3', 3", 40)
is the outermost layer (3', 3", 40).

6. Layer system according to one or more of Claims 1 to 5, wherein the AlCr and AlCrO layers are PVD coatings.

7. Layer system according to Claim 1
which has two or three sublayers,
wherein the layer (3', 3", 40) according to one or more of Claims 2, 3, 4, 5 or 6 forms the outermost layer.

8. Layer system according to one or more of the preceding Claims 1 to 7,
wherein the chromium intermediate layer (49) has a thickness of 0.2 µm.

9. Blade
having at least partly a layer system according to one or more of Claims 1 to 8.

## Revendications

1. Système de couches, comportant au moins :
un substrat (4, 41) métallique
- une couche (49) intermédiaire de chrome directement sur le substrat (4),
notamment en Cr/CrN,
- une couche (7, 43) inférieure ou médiane, comportant de l'AlCr,
- une couche (3', 3", 40) extérieure,
comportant de l'AlCrO,
notamment constituée en AlCrO.

2. Système de couches suivant la revendication 1,
dans lequel le substrat (4, 41) métallique comporte de l'acier ou chrome en un pourcentage en poids >=9.

3. Système de couches suivant la revendication 1 ou 2,
ayant une rugosité du substrat (4) <=2µm.

4. Système de couches suivant l'une ou plusieurs des revendications 1, 2 ou 3,
dans lequel la couche (7, 43) inférieure ou médiane est en AlCr.

5. Système de couches suivant l'une ou plusieurs des revendications 1, 2, 3 ou 4,
dans lequel une couche (3', 3", 40) extérieure représente la couche (3', 3", 40) la plus à l'extérieur.

6. Système de couches suivant l'une ou plusieurs des revendications 1 à 5,
dans lequel les couches en AlCr et AlCrO représentent des revêtements PVD.

7. Système de couches suivant la revendication,
qui est constitué en deux strates ou en trois strates,
dans lequel la couche (3', 3", 40) suivant l'une ou plusieurs des revendications 2, 3, 4, 5 ou 6 forme la couche la plus à l'extérieur.

8. Système de couches suivant l'une ou plusieurs des revendications 1 à 7 précédentes,
dans lequel la couche (49) intermédiaire en chrome a une épaisseur de 0,2µm.

9. Aube,
qui a au moins en partie un système de couches suivant l'une ou plusieurs des revendications 1 à 8.
